# EUROPEAN PATENT APPLICATION

(11) **EP 3 565 144 A1**
(43) Date of publication of application: **06.11.2019**
(21) Application number: 18290043.1
(22) Date of filing: 02.05.2018
(51) Int. Cl.: H04B 10/2513, H04B 10/40, H04B 10/50, H04B 10/61

(54) **METHOD FOR TRANSMITTING AN OPTICAL SIGNAL AND ASSOCIATED EQUIPMENT**

(71) Applicant: Nokia Solutions and Networks Oy, 02610 Espoo (FI)
(72) Inventor: Rios Muller, Rafael, 91620 Nozay (FR); Estaran, Jose, 91620 Nozay (FR); Charlet, Gabriel, 91620 Nozay (FR)
(74) Representative: Croonenbroek, Thomas Jakob

(57) **Abstract**

The present invention refers to an Equipment (1) comprising:
- a first optical transceiver (3) comprising a first laser source (7) having a first frequency (f₀) and a first spectral width (Δ) and associated with a first single-dimension modulator (9),
- a second optical transceiver (3') comprising a second laser source (7') having a second frequency (f₀') and associated with a second single-dimension modulator (9'),
- at least one optical link (25, 25') configured to connect the input of the first (3) and the second (3') transceivers to the output of the respective second (3') and first (3) transceivers,
wherein an optical transceiver (3, 3') is configured for applying coherent detection for detecting a signal received from the other optical transceiver (3, 3') and wherein the first (f₀) and the second (f₀') frequencies of the optical signals emitted by the first (7) and the second (7') laser sources are shifted of a value corresponding to 50% of the predetermined first spectral width (Δ) in order to detect a half side band (H1, H2) of the transmitted signal corresponding to the half side band (H2) located between the first (f₀) and the second (f₀') frequencies.

## Description

### BACKGROUND OF THE INVENTION

The present invention relates to the field of optical transmission networks and in particular to the detection of optical signals transmitted through optical links of the network. Two main technological alternatives are used nowadays for detection in the optical networks: the direct detection and the coherent detection.

In the direct detection, the transmitted signal is modulated in intensity and this intensity (corresponding to a power envelope) is detected directly by photodiodes. Such technique provides limited bitrates, lower sensitivity, and hinders the compensation of other impairments such as chromatic dispersion but is much cheaper than the coherent detection. As a consequence, the direct detection is mainly used in short distance connection, notably connections shorter than 20 kilometers for which chromatic dispersion impairment remain acceptable.

In coherent detection, the modulation is applied on several dimensions (two quadrature components and two polarization states) and the detection is achieved by mixing the transmitted signal (both polarization states independently) with a signal provided by a local oscillator and having the same frequency as the transmitted signal. The different components of the mixed signal are then detected by a plurality of photodiodes. Such technique enables high bitrates and long reach connections but requires expensive equipment. Coherent detection is mainly used in long-haul connections, notably over 100 kilometers, where no other techniques are available.

For medium-reach connections, notably between 20 and 100 kilometers, the advantages and the drawbacks of both techniques have to be compared for each case in order to determine which technique provides the better trade-off which can be a cumbersome process and may lead to a solution that is not really adapted to the needs.

### SUMMARY OF THE INVENTION

It is therefore a goal of the present invention to overcome at least partially the problems of the state of the art and to propose a third alternative technique which would provide mid-range reach connections (between 20 and 100 kilometers) with an acceptable quality of transmission without requiring in-line amplification and which would be cheaper than the existing solutions of the state of the art.

Thus, the invention refers to an equipment comprising:
- a first optical transceiver having an input and an output and comprising:
   - a first laser source configured for emitting an optical signal having a first frequency and a first spectral width,
   - a first single-dimension modulator having an input configured to be coupled to the first laser source and an output configured to be coupled to the output of the first optical transceiver,
   - a first and a second photodiodes,
   - a first and a second optical combiners having respectively:
      - an output configured to be coupled to the respective first and second photodiodes,
      - a first and a second inputs,
   - a first optical splitter having:
      - two outputs configured to be coupled respectively to the first input of the respective first and second optical combiners,
      - an input configured to be coupled to the first laser source,
   - a first polarization beam splitter having:
      - two outputs configured to be coupled respectively to the second input of the respective first and second optical combiners,
      - an input configured to be coupled to the input of the first optical transceiver,
- a second optical transceiver having an input and an output and comprising:
   - a second laser source configured for emitting an optical signal having a second frequency and a second spectral width,
   - a second single dimension modulator having an input configured to be coupled to the second laser source and an output configured to be coupled to the output of the second optical transceiver,
   - a third and a fourth photodiodes,
   - a third and a fourth optical combiners having respectively:
      - an output configured to be coupled to the respective third and fourth photodiodes,
      - a first and a second inputs,
   - a second optical splitter having:
      - two outputs configured to be coupled respectively to the first input of the respective third and fourth optical combiners,
      - an input configured to be coupled to the second laser source,
   - a second polarization beam splitter having:
      - two outputs configured to be coupled respectively to the second input of the respective third and fourth optical combiners,
      - an input configured to be coupled to the input of the second optical transceiver,
- at least one optical link configured to connect the input of the first and the second transceivers to the output of the respective second and first transceivers,
wherein an optical transceiver is configured for applying coherent detection for detecting a signal received from the other optical transceiver and wherein the first and the second frequencies of the optical signals emitted by the first and the second laser sources are shifted of a value corresponding to 50% of the predetermined first spectral width in order to detect a half side band of the transmitted signal corresponding to the half side band located between the first and the second frequencies.

According to another aspect of the present invention, the second spectral width corresponds to the first spectral width.

According to another aspect of the present invention, the at least one optical link has a length comprised between 20 and 100 kilometers.

According to another aspect of the present invention, the first and/or the second single-dimension modulators are Mach-Zehnder modulators.

According to another aspect of the present invention, the single-dimension Mach-Zehnder modulator is configured to be biased around the minimum output power point to generate a signal without carrier to avoid saturating an analog-to-digital converter at the reception.

According to another aspect of the present invention, the first and/or the second single-dimension modulators are electro-absorption modulators.

According to another aspect of the present invention, at least the first optical transceiver comprise respectively a first additional photodiode to form a first pair of photodiodes with the first photodiodes and a second additional photodiode to form a second pair of photodiodes with the second photodiode, wherein the first and the second optical combiners have a second output and wherein the additional photodiode of the first pair is configured to be coupled to the second output of the first combiner in order to produce a coherent detection based on balanced photodiodes in combination with the first photodiode and the additional photodiode of the second pair is configured to be coupled to the second output of the second combiner in order to produce a coherent detection based on balanced photodiodes in combination with the second photodiode.

According to another aspect of the present invention, the first and the second optical transceivers also comprises:
- a digital processing unit,
- an analog to digital conversion unit for converting a detected signal into a digital signal, the said analog to digital conversion unit comprising a transimpedance amplifier,
- a digital to analog conversion unit for converting a digital signal into an analog signal used to feed a modulator,
wherein the digital processing unit is configured for providing a signal having a guard band free of data on both side of the carrier frequency, the spectral width of the said guard band corresponding to a roll-off of the transimpedance amplifier.

According to another aspect of the present invention, the optical combiners are 3dB combiners.

According to another aspect of the present invention, the optical splitters are 3dB splitters.

The present invention also refers to a method for transmitting an optical signal between a transmitter and a receiver through an optical link and for detecting the optical signal at the receiver wherein the transmitter is configured for transmitting an optical signal having a first frequency and a first spectral width, the said signal being modulated over a single dimension and wherein the receiver is configured to apply a coherent detection based on a local oscillator configured to produce an optical signal having a second frequency corresponding to the first frequency shifted of a value corresponding to half of the first spectral width in order to detect a half side band of the transmitted signal corresponding to the half side band located between the first and the second frequencies.

According to another aspect of the present invention, the second spectral width corresponds to the first spectral width.

According to another aspect of the present invention, a guard band free of data is reserved on both side of the carrier frequency, the spectral width of the said guard band corresponding to a roll-off of a transimpedance amplifier of the receiver in order to enable filtering out noise and an undesirable carrier of the transmitted optical signal.

The present invention also refers to an optical transceiver configured for receiving an optical signal having a first frequency and a first spectral width, the said optical transceiver comprising:
- a laser source configured for emitting an optical signal having a second frequency and a first spectral width,
- a polarization beam splitter configured for splitting two quadrature components of the received optical signal,
- a first and a second optical combiners configured to combine the respective splitted components with a signal emitted by the laser source,
- a first and a second photodiodes configured for detecting the respective combined signals,
wherein the first and the second frequencies are shifted of a value corresponding to 50% of the predetermined first spectral width in order to detect a half side band of the received signal corresponding to the half side band located between the first and the second frequencies.

According to another aspect of the present invention, the optical transceiver also comprises:
- a single-dimension modulator coupled to the laser source and configured for transmitting an optical signal having a second frequency and a first spectral width toward another transceiver through an optical link.

### BRIEF DESCRIPTION OF THE DRAWINGS

FIG.1 is a diagram of an equipment according to a first embodiment of the present invention,
FIG.2 is a diagram of an equipment according to a second embodiment of the present invention,
FIG.3 is graph representing an example of the spectral width of an optical signal transmitted by an equipment according to an embodiment of the present invention,
FIG.4 is a graph representing an example of the spectral widths of both the transmitted optical signal and the signal emitted by the local oscillator for the detection,
FIG.5 is a graph representing an example of the spectral width of an optical signal comprising a guard band on both side of the carrier frequency,
FIG.6 is a flowchart of the steps of the method according to the present invention.

### DETAILED DESCRIPTION OF THE INVENTION

The following achievements are examples. Although, the specification refers to one or several embodiments, it does not imply that each reference refers to the same embodiment or that the features apply only to a single embodiment. Simple features of different embodiments can also be combined to provide other embodiments.

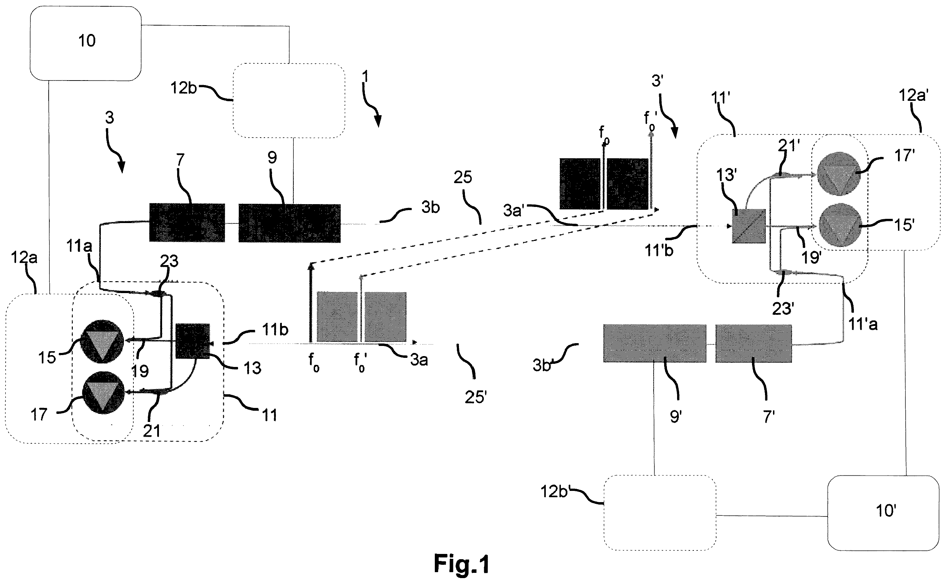

Fig.1 represents an equipment 1 according to a first embodiment of the present invention. The equipment 1 comprises a first optical transceiver 3 having an input 3a and an output 3b and a second optical transceiver 5 having an input 5a and an output 5b.

The first optical transceiver 3 comprises a first laser source 7. The output of the first laser source 7 is coupled on one side to a first single-dimension modulator 9 and on the other side to a first input 11a of a first detection device 11.

The first single-dimension modulator 9 has an output configured to be coupled to the output 3b of the first optical transceiver 3 and is configured for modulating the optical signal emitted by the first laser source 7.

The first detection device 11 comprises a first polarization beam splitter 13 having an input coupled to the input 3a of the first optical transceiver 3 via the second input 11b of the first detection device 11 and two outputs coupled respectively to a first 15 and a second 17 photodiodes via respectively a first 19 and a second 21 optical combiners which are for example 3dB combiners.

The first 19 and the second 21 optical combiners are also respectively coupled to a first optical splitter 23 which is also coupled to the first laser source 7 via the first input 11a of the first detection device 11.

The first optical combiner 19 is configured for mixing a first polarization component of the signal received at the input 3a of the optical transceiver 3 with the signal of the local laser source 7 and for transmitting the mixed signal to the first photodiode 15.

The second optical combiner 21 is configured for mixing a second polarization component of the signal received at the input 3a of the optical transceiver 3 with the signal of the local laser source 7 and for transmitting the mixed signal to the second photodiode 17.

It is necessary to detect both polarization states even if only one polarization is transmitted initially by the transmitter due to the polarization changes along the transmission.

In the same way, the second optical transceiver 3' comprises a second laser source 7'. The output of the second laser source 7' is coupled on one side to a second single-dimension modulator 9' and on the other side to a first input 11'a of a second detection device 11'.

The second single-dimension modulator 9' has an output configured to be coupled to the output 3'b of the second optical transceiver 3' and is configured for modulating the optical signal emitted by the second laser source 7'.

The second detection device 11' comprises a second polarization beam splitter 13' having an input coupled to the input 3'a of the second optical transceiver 3' via the second input 11'b of the second detection device 11' and two outputs coupled respectively to a third 15' and a fourth 17' photodiodes via respectively a third 19' and a fourth 21' optical combiners which are for example 3dB combiners.

The first and the second optical combiners are also respectively coupled to a second optical splitter 23', for example a 3dB splitter, which is also coupled to the second laser source 7' via the first input 11'a of the second detection device 11'.

With such configuration, the same laser source 7, 7' of an optical transceiver 3, 3' is used for the transmission and the detection in order to reduce the number of equipments required. In such case, the transceiver 3, 3' may act alternatively as a transmitter or as a receiver. The laser source 7, 7' may be tunable laser sources or fixed laser sources. Alternatively, two different laser sources may be used for the transmission and the reception.

The single-dimension modulators 9, 9' can be Mach-Zehnder modulators or electro-absorption modulators (or a combination of both). In the case of Mach-Zehnder modulators, the modulators can be configured to be biased around a minimum output power point to generate a signal without carrier to avoid saturating an analog-to-digital conversion unit upon reception..

The first 3 and the second 3' optical transceivers also comprise a digital processing unit 10, 10' configured for providing the modulating signal to the modulator 7, 7' when the optical transceiver 3, 3' is used as a transmitter and for processing the signals detected by the photodiodes when the optical transceiver 3, 3' is used as a receiver.

Furthermore, the photodiodes 15, 17 of the first optical transceiver 3 are parts of an analog to digital conversion unit 12a configured for converting a detected signal into a digital signal, the said analog to digital conversion unit 12a comprising a transimpedance amplifier. In the same way, the photodiodes 15', 17' of the second optical transceiver 3' are parts of an analog to digital conversion unit 12a' configured for converting a detected signal into a digital signal, the said analog to digital conversion unit 12a' comprising a transimpedance amplifier.

The first 3 and the second 3' optical transceivers also comprise respectively a digital to analog conversion unit 12b, 12b' configured for converting a digital signal into an analog signal used to feed the modulators 9, 9' of the respective first 3 and second 3' optical transceivers.

The first 3 and the second 3' optical transceivers are connected by at least one optical link 25, 25' coupled between the outputs 3b, 3'b and the inputs 3a, 3'a of both transceivers 3, 3'. In the present case, a first optical link 25 is arranged between the output 3b of the first optical transceiver 3 and the input 3'a of the second optical transceiver 3' and a second optical link 25' is arranged between the output 3'b of the second optical transceiver 3' and the input 3a of the first optical transceiver 3. Alternatively, a single bidirectional optical link may be arranged between the first 3 and the second 3' optical transceivers.

Furthermore, the detection devices 11, 11' are configured for applying a coherent detection for detecting a received signal when the associated optical transceiver 3, 3' acts as a receiver. In the present case, the coherent detection refers to the mixing of the received signal with a signal produced locally by the laser source 7, 7' of the optical transceiver 11, 11' acting as a receiver and the detection by the photodiodes 15, 17, 15', 17' of the components of the mixed signal. However, unlike classical coherent detection (homodyne detection), the frequency of the local laser source 7, 7' is shifted with respect to the frequency of the laser source 7', 7 of the optical transceiver 3', 3 acting as a transmitter (heterodyne detection) by a value B corresponding to 50% of the spectral width Δ of the laser source 7, 7' of the optical transceiver 3, 3' acting as a transmitter (which is generally the same as the spectral width of the local laser source 7', 7). Such spectral width Δ is for example obtained using a filter corresponding to the spectral width of a transmission channel, for example 50 GHz.

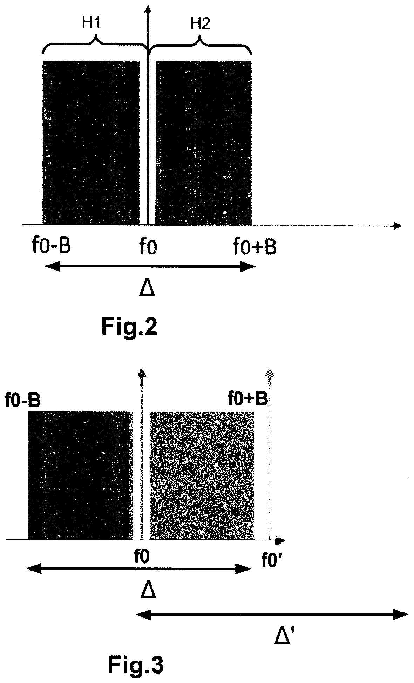

Fig.2 represents a graph of an example of a spectral width Δ of the transmitted signal. The spectrum is centered around the frequency f₀ of the laser source 7, 7' and is lying between the frequency f₀-B and f₀+B where B corresponds to 50% of the spectral width Δ. The spectral width Δ can be considered as two half side band H₁ and H₂ having the same content as only real values are transmitted. Indeed, with a single-dimension modulator 9, 9', the generated spectrum is symmetric (Hermitian symmetry) and the same information is carried on both side of the spectrum around the carrier frequency f₀.

Fig.3 represents a graph of both the spectral width Δ of the transmitted signal and the spectral width Δ' of the local laser source (laser source of the receiver). The spectral width Δ' of the local laser source7, 7' is centered around the frequency f₀+B (alternatively it could have been centered around f₀-B so that the other half side band H1 would have been detected).

With such shifting between the frequency f₀ of the transmitted signal and the frequency f₀' of the local laser source 7, 7', only a half side band H₂ of the transmitted signal is detected. Such half side band H2 corresponds to the half side band located between the frequency f₀ of the transmitted signal and the frequency f₀' of the local laser source 7, 7' which is the overlapping portion of both spectral widths Δ and Δ' in Fig.3.

Thus, in the case of a connection between the first optical transceiver 3 and the second optical transceiver 3', the first laser source 7 can be set to a first frequency fo and the second laser source 7' can be set to a second frequency f₀'=f₀+B. These frequencies may remain identical when the first optical transceiver 3 is the emitter and the second optical transceiver 3' is the receiver and conversely as the overlapping portion of both spectral width remains the same as represented with the spectral widths of both transmission in Fig.1.

Such configuration enables providing a connection with less impairments and in particular less chromatic dispersion than a direct detection configuration as said chromatic dispersion can be compensated digitally at the receiver. Moreover, the required equipment is simplified with respect to a classical coherent detection equipment notably due to the single-dimension modulators 9, 9' than are much simple and therefore cheaper than the multi-dimension modulators used in the known coherent detection receivers. Furthermore, such technique enables reaching medium-haul distances (between 20 and 100 kms) transparently without requiring inline optical amplification or dispersion compensation modules at the reception and enables using high order modulation format such as quadrature modulation formats so that high throughput, for example 100Gb/s, can be reached.

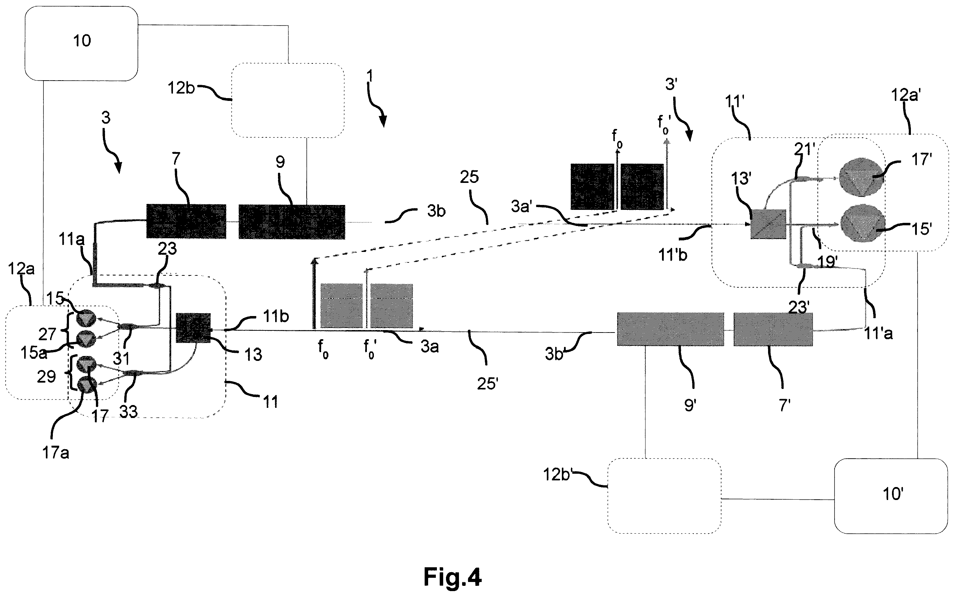

Fig.4 represents a second embodiment of the detection device 11, 11'. In Fig.4, only the first detection device 11 is represented according to this second embodiment but this second embodiment may also be applied on the second optical transceiver 3'. This second embodiments refers to the use of balanced photodiodes requiring two additional photodiodes 15a and 17a to form a first pair of photodiodes 27 and a second pair of photodiodes 29.

The first detection device 11 comprises a first polarization beam splitter 13 having an input coupled to the input 3a of the first optical transceiver 3 via the second input 11b of the first detection device 11 and two outputs coupled respectively to a first 27 and a second 29 pairs of photodiodes via respectively a first 31' and a second 33 optical combiners which are for example 3dB combiners. The first 31 and the second 33 optical combiners are also respectively coupled to a first optical splitter 23 which is also coupled to the first laser source 7 via the first input 11a of the first detection device 11.

The first optical combiner 31 is configured for mixing a first signal E1 corresponding to a first polarization component of the signal received at the input 3a of the optical transceiver 3 with a second signal E2 corresponding to the signal of the local laser source 7 and for transmitting a first component (corresponding to half the sum of the first E1 and the second E2 signals ((E1+E2)/2)) of the mixed signal to a photodiode 15 of the first pair 27 and for transmitting a second component (corresponding to half the difference of the first E1 and the second E2 signals ((E1-E2)/2)) of the mixed signal to an additional photodiode 15a of the first pair 27.

The second optical combiner 33 is configured for mixing a first signal E1' corresponding to a second polarization component of the signal received at the input 3a of the optical transceiver 3 with a second signal E2 corresponding to the signal of the local laser source 7 and for transmitting a first component (corresponding to half the sum of the first E1' and the second E2 signals ((E1'+E2)/2)) of the mixed signal to a photodiode 17 of the second pair 29 and for transmitting a second component (corresponding to half the difference of the first E1' and the second E2 signals ((E1'-E2)/2)) of the mixed signal to an additional photodiode 17a of the second pair 29.

The use of a detection device 11 comprising balanced photodiodes enables canceling the DC component and the nonlinear signal-signal beating components of the transmitted signal and therefore improving the overall signal-to-noise ratio.

Besides, as the carrier cannot be canceled when using electro-absorption modulators (or any other approach/technique for modulating the intensity of the optical field), in order to reduce the saturation of an analog-to-digital conversion unit upon detection, the transceiver 3, 3' acting as a transmitter can be configured to produce a signal having a guard band G free of data on both side of the carrier frequency, the spectral width of the said guard band G corresponding to a roll-off of the transimpedance amplifier used in the transceiver 3, 3' acting as a receiver.

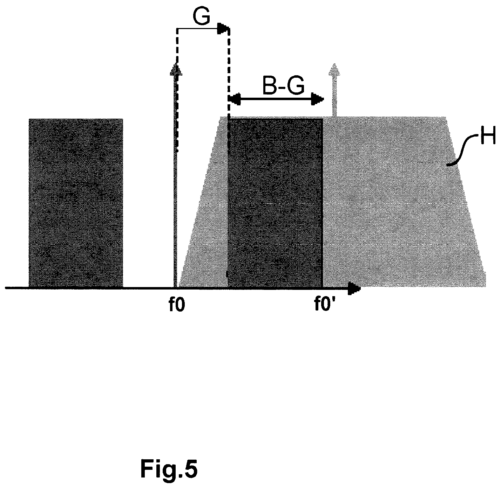

Fig.5 represents the spectrum of such signal comprising a guard band G on both side of the carrier frequency f₀ and the filtering function H of the transimpedance amplifier used in the transceiver acting as a receiver which is centered around the frequency f₀'. The value of the guard band G is for example comprised between 5 and 15 GHz. Such guard band G enables filtering out the undesirable carrier of the transmitted signal when it exists as well as noise but reduces the available bandwidth of the transmission.

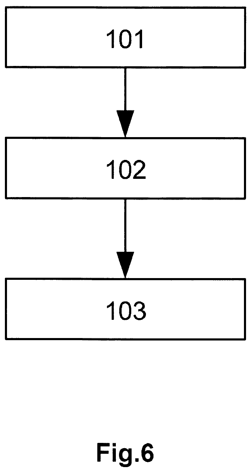

Fig.6 is a flowchart of the different steps of a method for transmitting an optical signal between a transmitter and a receiver through an optical link according to the present invention.

The first step 101 refers to the generation of an optical signal having a first frequency f₀ and a first spectral width Δ and being provided by a first laser source 7 and modulated with a single dimension modulator 9, for example a Mach-Zehnder modulator or an electro-absorption modulator. Such generation step may be achieved in a first transceiver 3.

The second step 102 refers to the transmission of the generated signal through an optical link, for example from the first transceiver 3 to a second transceiver 3'. The length of the optical link may be comprised between 20 and 100 kilometers.

The third step 103 refers to the detection of the transmitted signal by applying an heterodyne coherent detection using a local oscillator, such as a second laser source 7' of the second transceiver 3'. The said second laser source 7' is configured to produce an optical signal having a second frequency f₀' corresponding to the first frequency f₀ shifted of a value corresponding to half of the first spectral width Δ in order to detect a half side band H2 of the transmitted signal corresponding to the half side band H2 located between the first f₀ and the second f₀' frequencies. The spectral width Δ' of the second laser source 7' may be identical to the spectral width Δ of the first laser source 7 (same filter used at the output of the laser source 7, 7').

Thus, the use of a simplified coherent detection wherein information is modulated on a single dimension at the transmitter and transmitted through a channel having a first frequency (corresponding to the frequency of the laser source of the transmitter) and a first spectral width and wherein the local oscillator of the receiver is tuned to a second frequency (heterodyne detection) corresponding to the first frequency shifted of a value corresponding to 50% of the predetermined first spectral width in order to detect of a half side band of the transmitted signal corresponding to the half side band located between the first and the second frequencies.

Such simplified coherent detection is particularly advantageous for medium reach transmission comprised between 20 and 100 kilometers as it ensures a good signal to noise ratio at a lower cost than the classical coherent detection based on multi-dimension modulation and homodyne detection.

## Claims

1. Equipment (1) comprising:
- a first optical transceiver (3) having an input (3a) and an output (3b) and comprising:
- a first laser source (7) configured for emitting an optical signal having a first frequency (f₀) and a first spectral width (Δ),
- a first single-dimension modulator (9) having an input configured to be coupled to the first laser source and an output configured to be coupled to the output of the first optical transceiver,
- a first (15, 27) and a second (17, 29) photodiodes,
- a first (19, 31) and a second (21, 33) optical combiners having respectively:
- an output configured to be coupled to the respective first and second photodiodes,
- a first and a second inputs,
- a first optical splitter (23) having:
- two outputs configured to be coupled respectively to the first input of the respective first and second optical combiners,
- an input configured to be coupled to the first laser source,
- a first polarization beam splitter (13) having:
- two outputs configured to be coupled respectively to the second input of the respective first and second optical combiners,
- an input configured to be coupled to the input of the first optical transceiver,
- a second optical transceiver (3') having an input (3'a) and an output (3'b) and comprising:
- a second laser source (7') configured for emitting an optical signal having a second frequency (f₀') and a second spectral width (Δ'),
- a second single dimension modulator (9') having an input configured to be coupled to the second laser source (7') and an output configured to be coupled to the output (3'b) of the second optical transceiver (3'),
- a third (15') and a fourth (17') photodiodes,
- a third (19') and a fourth (21') optical combiners having respectively:
- an output configured to be coupled to the respective third (15') and fourth (17') photodiodes,
- a first and a second inputs,
- a second optical splitter (23') having:
- two outputs configured to be coupled respectively to the first input of the respective third (19') and fourth (21') optical combiners,
- an input configured to be coupled to the second laser source,
- a second polarization beam splitter (13') having:
- two outputs configured to be coupled respectively to the second input of the respective third (19') and fourth (21') optical combiners,
- an input configured to be coupled to the input of the second optical transceiver (3'),
- at least one optical link (25, 25') configured to connect the input of the first (3) and the second (3') transceivers to the output of the respective second (3') and first (3) transceivers,
wherein an optical transceiver (3, 3') is configured for applying coherent detection for detecting a signal received from the other optical transceiver (3, 3') and wherein the first (f₀) and the second (f₀') frequencies of the optical signals emitted by the first (7) and the second (7') laser sources are shifted of a value corresponding to 50% of the predetermined first spectral width (Δ) in order to detect a half side band (HI, H2) of the transmitted signal corresponding to the half side band (H2) located between the first (f₀) and the second (f₀') frequencies.

2. Equipment (1) in accordance with claim 1 wherein the second spectral width (Δ') corresponds to the first spectral width (Δ).

3. Equipment (1) in accordance with claim 1 or 2 wherein the at least one optical link (25, 25') has a length comprised between 20 and 100 kilometers.

4. Equipment (1) in accordance with one of the previous claims wherein the first and/or the second single-dimension modulators (9, 9') are Mach-Zehnder modulators.

5. Equipment (1) in accordance with claim 4 wherein the single-dimension Mach-Zehnder modulator is configured to be biased around the minimum output power point to generate a signal without carrier to avoid saturating an analog-to-digital conversion unit (12a, 12a') at the reception.

6. Equipment (1) in accordance with one of the previous claims wherein the first and/or the second single-dimension modulators (7, 7') are electro-absorption modulators.

7. Equipment (1) in accordance with one of the previous claims wherein at least the first optical transceiver (3) comprise respectively a first additional photodiode (15a) to form a first pair of photodiodes (27) with the first photodiodes (15) and a second additional photodiode (17a) to form a second pair of photodiodes (29) with the second photodiode (17), wherein the first (31) and the second (33) optical combiners have a second output and wherein the additional photodiode (15a) of the first pair (27) is configured to be coupled to the second output of the first combiner (31) in order to produce a coherent detection based on balanced photodiodes in combination with the first photodiode (15) and the additional photodiode (17a) of the second pair (29) is configured to be coupled to the second output of the second combiner (33) in order to produce a coherent detection based on balanced photodiodes in combination with the second photodiode (17).

8. Equipment (1) in accordance with one of the previous claims wherein the first (3) and the second (3') optical transceivers also comprises:
- a digital processing unit (10, 10'),
- an analog to digital conversion unit (12a, 12a') for converting a detected signal into a digital signal, the said analog to digital conversion unit comprising a transimpedance amplifier,
- a digital to analog conversion unit (12b, 12b') for converting a digital signal into an analog signal used to feed a modulator,
wherein the digital processing unit (10, 10') is configured for providing a signal having a guard band (G) free of data on both sides of the carrier frequency (f₀), the spectral width of the said guard band (G) corresponding to a roll-off of the transimpedance amplifier.

9. Equipment (1) in accordance with one of the previous claims wherein the optical combiners (19, 21, 19', 21', 31, 33) are 3dB combiners.

10. Equipment in accordance with one of the previous claims wherein the optical splitters (23), 23') are 3dB splitters.

11. Method for transmitting an optical signal between a transmitter and a receiver through an optical link and for detecting the optical signal at the receiver wherein the transmitter is configured for transmitting an optical signal having a first frequency (f₀) and a first spectral width (Δ), the said signal being modulated over a single dimension (101) and wherein the receiver is configured to apply a coherent detection based on a local oscillator configured to produce an optical signal having a second frequency (f₀') corresponding to the first frequency (f₀) shifted of a value corresponding to half of the first spectral width (Δ) in order to detect a half side band (H1, H2) of the transmitted signal corresponding to the half side band (H1, H2) located between the first (f₀) and the second (f₀') frequencies (103).

12. Method in accordance with claim 11 wherein the second spectral width (Δ') corresponds to the first spectral width (Δ).

13. Method in accordance with claim 11 or 12 wherein a guard band (G) free of data is reserved on both side of the carrier frequency (f₀), the spectral width of the said guard band (G) corresponding to a roll-off of a transimpedance amplifier of the receiver in order to enable filtering out noise and an undesirable carrier of the transmitted optical signal.
